(19) Europäisches Patentamt

European Patent Office

Office européen des brevets

(11) **EP 3 345 318 B1**

(12) **EUROPEAN PATENT SPECIFICATION**

(45) Date of publication and mention
of the grant of the patent:
**12.08.2020 Bulletin 2020/33**

(51) Int Cl.:
*H04J 13/00* (2011.01)     *H04B 1/707* (2011.01)
*H04W 80/02* (2009.01)     *H04B 1/7077* (2011.01)
*H04B 1/708* (2011.01)

(21) Application number: **15902479.3**

(22) Date of filing: **17.12.2015**

(86) International application number:
**PCT/CA2015/000603**

(87) International publication number:
**WO 2017/035623 (09.03.2017 Gazette 2017/10)**

(54) **IDENTIFYING A CODE FOR SIGNAL DECODING**

IDENTIFIZIERUNG EINES CODES ZUR SIGNALDECODIERUNG

IDENTIFICATION D'UN CODE POUR LE DÉCODAGE DE SIGNAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2015 US 201514843167**

(43) Date of publication of application:
**11.07.2018 Bulletin 2018/28**

(73) Proprietor: **Cognitive Systems Corp.
Waterloo, Ontario N2L 0A9 (CA)**

(72) Inventors:
• **DEVISON, Stephen, A.**
  **Waterloo, Ontario N2L 0A9 (CA)**
• **OMER, Mohammad**
  **Waterloo, Ontario N2L 0A9 (CA)**

(74) Representative: **Potter Clarkson
The Belgrave Centre
Talbot Street
Nottingham NG1 5GG (GB)**

(56) References cited:
WO-A1-2006/029276     US-A1- 2002 154 615
US-A1- 2011 310 935     US-B1- 8 488 578

**Description**

BACKGROUND

This specification relates to identifying a code for signal decoding.

Communication signals can be encrypted, orthogonalized, randomized, or otherwise manipulated using a large set of codes during transmission in a communication network. For example, scrambling codes can be used to distinguish the distinct transmitters of communication signals in a communication network. In the case of WCDMA uplink transmissions, users are assigned orthogonal scrambling codes derived from a very large set. A set can have a large number of codes (e.g., $2^{24}$ = 16,777,216).

SUMMARY

In a general aspect, a code is identified for decoding a wireless signal.

In some aspects, a method of decoding a wireless signal includes computing multiple superposition codes based on a set of orthogonal binary codes. The set includes a number of subsets; each superposition code corresponds to one of the subsets and includes a combination of the binary codes in the corresponding subset. Computing the superposition code corresponding to a subset comprises generating phased codes by applying a distinct phase to each binary code in the subset and summing the phased codes. A first subset of the number of subsets is selected based on a correlation between a wireless signal and a first superposition code. The first superposition code corresponds to the first subset. A first binary code is selected from the first subset based on a correlation between the wireless signal and the first binary code. The wireless signal is decoded based on the first binary code.

In some aspects, a wireless signal processing system includes a radio system configured to detect a wireless signal and a data processing system as set out in claim 7. The data processing system is configured to obtain the wireless signal and superposition codes. The superposition codes are based on a set of orthogonal binary codes, and the set includes a number of subsets. Each superposition code corresponds to one of the subsets and includes a combination of the binary codes in the corresponding subset. A first subset is selected based on a correlation between the wireless signal and a first superposition code. The first superposition code corresponds to the first subset. A first binary code is selected from the first subset based on a correlation between the wireless signal and the first binary code. The wireless signal is decoded based on the first binary code.

The details of one or more implementations are set forth in the accompanying drawings and the description below. Other features, objects, and advantages will be apparent from the description and drawings, and from the claims.

DESCRIPTION OF DRAWINGS

FIG. 1 is a block diagram showing an example wireless network.

FIG. 2 is a flow chart showing an example process of identifying a code for wireless signal decoding.

FIG. 3 is a block diagram showing aspects of an example process of identifying a code for wireless signal decoding.

FIG. 4 includes example binary trees showing aspects of an example process of identifying a code for wireless signal decoding.

Like reference symbols in the various drawings indicate like elements.

DETAILED DESCRIPTION

In some aspects of what is described here, a code is identified for signal decoding. A communication signal (e.g., a wireless signal transmitted over radio frequency (RF) spectrum or a wireline signal transmitted over copper, optical fiber, or other media) can be multiplied, encrypted, or otherwise manipulated with a code before transmission. The code can be selected from a large code set. To decode the received communication signal, the particular code used by the communication signal is identified. In some implementations, one or more of the example techniques described here can reduce the search space for identifying the code, and thus improve the efficiency and accuracy of the search.

In some implementations, a set of codes can be combined in such a way that a single search can yield results over numerous codes. Using the uplink WCDMA scenario as an example, 2,000 codes can be amalgamated within a single search in some instances. As such, the overall search space can be reduced, for example, from 16 million ($2^{24}$ = 16,777,216) to 8,000. The codes can be amalgamated in various ways depending on the application. For example, different phases and amplitudes can be applied to a given code or set of codes prior to combination, and yield different results depending on the intended performance metrics.

In some implementations, the combination of multiple orthogonal codes can be referred to as superposition, and the resulting combination of the set of codes can be referred to as a superposition code or a super-code. Once a certain superposition code has been confirmed to be present, an iterative search method can be implemented to use successive superposition codes (of decreasing size) to find the individual code, in some instances, in a maximum of $log(n)$ steps, where $n$ is the superposition depth of the current superposition code. Here, the superposition depth $n$ represents the number of codes, out of the allowable code space of the communication system, that are combined to create one code in the super-code dictionary.

The superposition depth $n$ can generally range from 1 to $N$, where $N$ represents the total number of codes in the allowable code space of the communication system. If $n = N$, there would be only one super-code in the super-code dictionary; all signals would correlate and the super-code dictionary would have no discriminating ability. If $n = 1$, the super-code dictionary would be equivalent to the allowable code space of the communication system, and no speedup would be obtained. A superposition depth between these two extremes (i.e., greater than 1 and less than $N$) can provide a tradeoff search space with the ability to discriminate codes and code-sets. In some cases, $log(N/n)$ steps will be required to link a particular signal to a super-code, and $log(N/n) + log(n)$ steps will be required to identify one particular code.

For example, an iterative binary search can be implemented to take a current set of orthogonal codes, split it into two halves (each has a half of the total number of orthogonal codes) and correlate both sets with the communication signal. The set with a higher correlation value can be selected as the winning set. The winning set can be further split into two halves and the above procedure can be repeated in a tree-like fashion, eventually leading to the code that was used to encode the communication signal.

In some implementations, the selected individual code can give higher noise resolution on the user and, thus, can allow extraction of precise signal-to-noise ratio (SNR) number of the user. In some implementations, the search time for the detection of a code can be reduced significantly. For example, in the monitoring of WCDMA uplink quality, one or more of the example techniques described here may help provide a more "real-time" view of users entering and leaving a network as well as detecting their specific impact on the overall network. This may include assessing the power control response, the spectral content, and many other metrics that can be attributed to a specific user in a given system.

In some implementations, the time difference of arrival (TDOA) of multiple users can be extracted from the sensor node, for example, by identifying a peak in the correlation result. Such ranging information can be used to cluster users within a certain geographical loci. The ranging information can also be used by multiple sensing nodes using triangulation to identify more precise user location. In some implementations, the magnitude of a correlation result can be used to identify the distance of a user from a sensing terminal. Such information can be combined with the knowledge of base station location to aid in the precise detection of the user location.

Although WCDMA is described as an example application, the techniques described here can be applied to other systems that use large sets of codes. In some instances, one or more of the example techniques described here can be used without dependence on a connection to either a user or base station. In some instances, one or more of the example techniques described here can offer a low-complexity search space without requiring a handshaking mechanism.

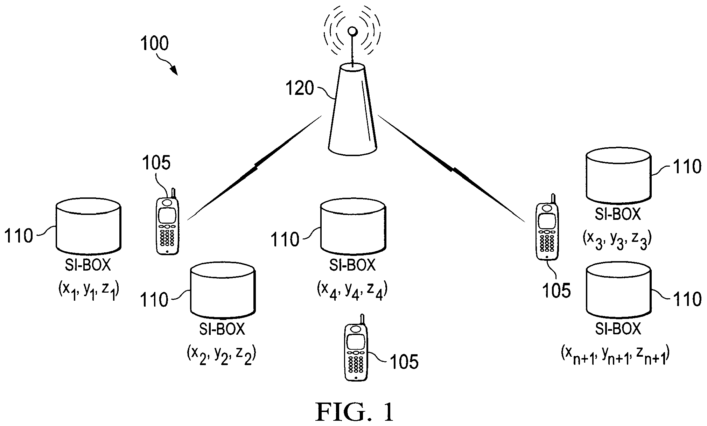

FIG. 1 is a block diagram showing an example wireless network 100. The example wireless network 100 includes multiple user equipment (UE, also referred to as "mobile devices" or "mobile nodes") 105, multiple wireless sensor devices (also referred to as "RF sensors," "sensors," or "spectrum inspection (SI) boxes") 110, and a base station 120. The wireless network 100 can include additional or different components. For example, the wireless network 100 can include more than one base station and the UE can move from a cell covered by one base station to another cell covered by another base station. In some implementations, a wireless network can be arranged as shown in FIG. 1 or in another manner.

A base station 120 typically provides wireless service for multiple user equipment (e.g., smartphones, tablets, Internet-of-things devices, and other cellular-connected devices, etc.) in a broad region, for example, over an entire cell of a cellular network (e.g., a cellular voice network, cellular data network, etc.). The base station 120 can wirelessly transmit communication signals to the UE 105 in the downlink direction, and the multiple UEs 105 can transmit communication signals to the base station 120 in the uplink direction. The communication signals can be formatted according to a particular communication standard or protocol, for example, 2G standards such as Global System for Mobile (GSM) and Enhanced Data rates for GSM Evolution (EDGE) or EGPRS; 3G standards such as Code division multiple access (CDMA), Universal Mobile Telecommunications System (UMTS), and Time Division Synchronous Code Division Multiple Access (TD-SCDMA); 4G standards such as Long-Term Evolution (LTE) and LTE-Advanced (LTE-A); wireless local area network (WLAN) or WiFi standards such as IEEE 802. 11, Bluetooth, near-field communications (NFC), millimeter communications; or multiple of these or other types of wireless communication standards. In some implementations, other types of communication (e.g., non-standardized signals and communication protocols) are used.

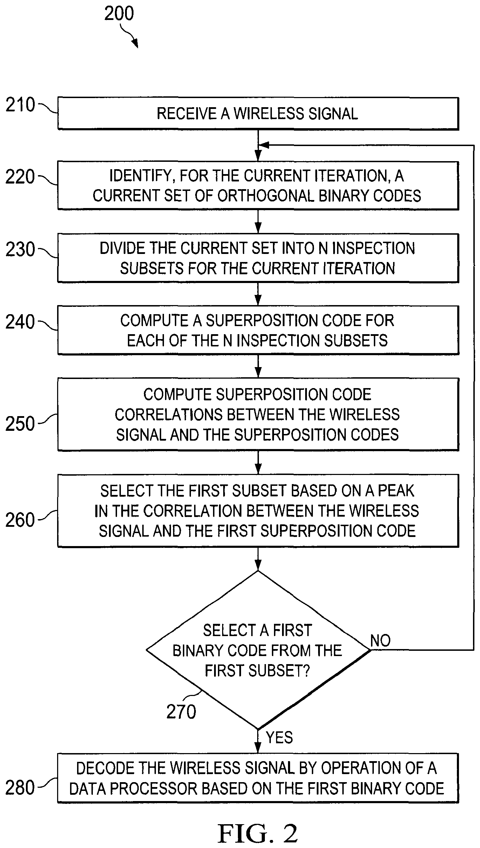

In some implementations, to distinguish the multiple UEs 105 served by the same base station 120, the uplink communication signals transmitted by each UE can be scrambled with a scrambling code. The scrambling code can be selected from a large set of orthogonal binary codes. Once the base station 120 receives the scrambled wireless signal, the base station 120 can de-scramble the received signal by searching over the entire set of scrambling codes to identify the particular scrambling code used by the UE 105 for decoding the received signal. In some cases, de-scrambling processes of the type shown in FIGs. 2, 3 and 4 can improve the accuracy and efficiency of identifying the matching scrambling code.

In some implementations, a UE 105 can receive wireless signals transmitted from more than one base station 120. Similarly, to distinguish the multiple base stations, the signals transmitted by each base station 120 can be scrambled with a particular scrambling code. The UE can perform the example techniques to identify the particular scrambling code used by respective base stations for decoding the received downlink signals from the base stations.

Also shown in FIG. 1 are a number of wireless sensor devices 110 distributed over a geographic region at respective physical locations with spatial coordinates $(x_i, y_i, z_i)$. The wireless sensor devices 110 can be identical or similar to each other, or a variety of different wireless sensor devices 110 can interact with the wireless network 100. The locations of the wireless sensor devices 110 can be fixed, or they can be at dynamic or otherwise movable locations.

The example wireless sensor devices 110 can monitor and analyze the RF spectrum at the respective locations, detect RF signals transmitted by the UE 105, and perform analyses of wireless communication services available at the associated geographic location. For instance, the wireless sensor device 110 can detect a wireless signal and decode the wireless signal formatted according to a wireless communication standard, such as, for example, any of the communication standards mentioned above. The example wireless sensor devices 110 can identify data packets and frames, and extract control information and traffic data of the detected wireless signal. For example, the wireless sensor device 110 can extract synchronization information, cells and services identifiers, and quality measurements of RF channels (e.g., channel quality indicator (CQI)), and derive spectral-usage parameters and other information based on these and other control information and traffic data of the wireless signal detected by the wireless sensor device 110.

In some implementations, in order to decode and analyze the detected wireless signal transmitted by a UE 105 or a base station, the wireless sensor device 110 can perform a decoding process to identify a particular scrambling code used by the particular UE 105 or the base station 120. For instance, the wireless sensor devices 110 may include processors or other computing hardware configured to perform one or more of the operations shown in FIGs. 2, 3 and 4. In some implementations, other components of the example wireless network 100 can use the same or similar processes, for example, for searching or otherwise identifying a binary code among a number of binary codes.

FIG. 2 is a flow chart showing an example process 200 for identifying a code for wireless signal decoding. The example process 200 can be implemented by a data processor or other computing hardware executing computer instructions stored on computer-readable media of a UE, a base station, a wireless sensor device, or other component of a communication system (e.g., of the example wireless network 100). The example process 200, individual operations of the process 200, or groups of operations may be iterated or performed in series or in parallel (for example, using multiple threads). In some cases, the example process 200 may include additional, fewer, or different operations performed in the order shown or in a different order.

At 210, a wireless signal is received, for example, wirelessly by operation of a radio interface of a UE, a base station, a wireless sensor device, or other component of a communication system. The wireless signal can be a signal that has been encrypted, orthogonalized, or otherwise manipulated with a binary code. The binary code can be an individual code (e.g., a scrambling code, a spreading code, or another other type of code that is selected from a set of orthogonal codes) applied to the wireless signal before transmission. The binary code can be selected from a set or a pool of binary codes, for example, from the allowable code space of a wireless communication system. The binary code can be a series of binary values, where each value in the series is one of two possible values (e.g., selected from the set (0,1), the set (-1,1), or another binary set). In the example shown in FIG. 2, to decode the received wireless signal, the binary code that was applied to the wireless signal (which can be referred to as the target binary code) is identified from the full set of binary codes in an iterative manner.

At 220, for the current iteration, a current set of binary codes is identified. For example, for the first iteration, the current set of binary codes can be the full or complete set of binary codes that the target binary code was selected from (e.g., the allowable code space of a wireless communication system. In some implementations, the number of binary codes included in the current set can decrease upon each iteration.

At 230, the current set is divided into a number of (e.g., N) inspection subsets (or groups) of binary codes for the current iteration. The number of binary codes in each inspection subset can be the same or different. In some implementations, the number of inspection subsets (i.e., the value of N) can vary or remain the same from iteration to iteration. For example, the number of inspection subsets can be larger in the first few iterations while becoming smaller in the later iterations. As an example, for the first iteration, the full set can be evenly divided into N = 8000 subsets (e.g., as in the WCDMA example described above). In the remaining iterations, N can remain as 2, and each subsequent set can be evenly divided into 2 inspection subsets, where each subset has half of the number of binary codes of that of the previous subset.

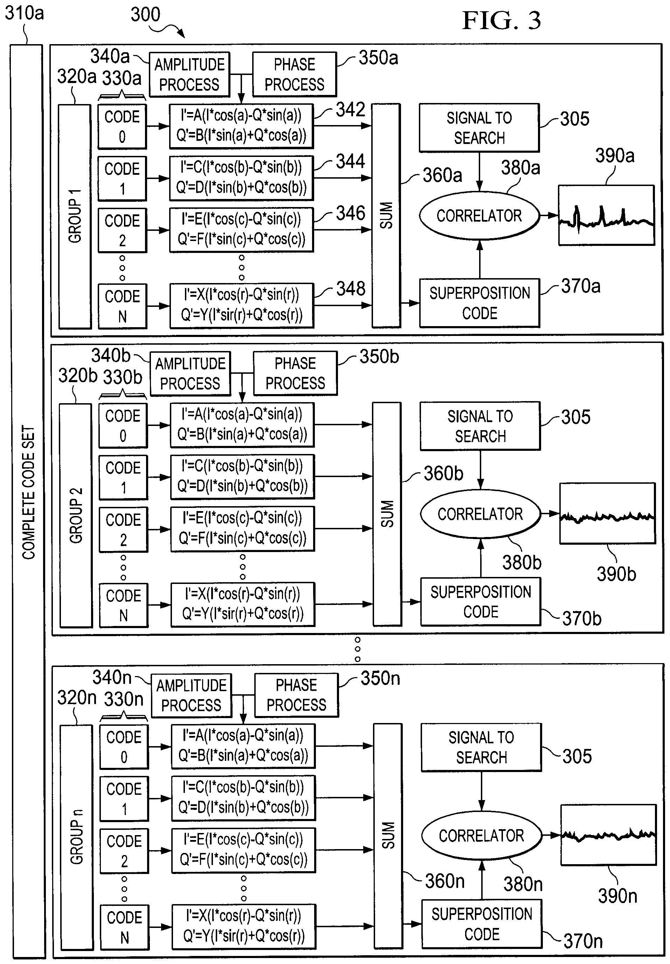

At 240, a superposition code corresponding to each of the N inspection subsets is computed. In some implementations, computing the superposition codes can include manipulation of a phase, amplitude, or both phase and amplitude of each binary code within the subset. For example, computing the superposition code corresponding to a subset can include generating phased codes by applying a distinct phase to each binary code in the subset, and summing the phased codes. The phased codes can be generated by applying a distinct phase and distinct amplitude to each binary code in the subset. Example processes for computing the superposition code are described below with respect to FIG. 3.

FIG. 3 is a block diagram 300 showing example aspects of identifying a code for wireless signal decoding. As shown in FIG. 3, the complete code set 310 is divided into n groups (inspection subsets) 320a, 320b, ..., 320n. Each group includes a respective number of binary codes, Code 0, Code 1, Code, ..., Code m (collectedly referred to as 330a, 330b, ..., 330n, respectively for each group). FIG. 3 shows an example amplitude process and phase process that can apply phase and amplitude functions to each of the binary codes, Code 0, Code 1, Code, ..., Code m. For example, a distinct phase and distinct amplitude can be applied to each binary code in Group 1 (320a). As a specific example, as shown at 342 for Code 0:

$$I' = A\ (I * \cos(a) - Q * \sin(a));\ \text{and} \qquad (1)$$

$$Q' = B\ (I * \cos(a) + Q * \sin(a)). \qquad (2)$$

In the example shown in Equations (1) and (2), $I'$ and $Q'$ represent the in-phase and quadrature components of the phased Code 0, respectively; and $I$ and $Q$ represent the in-phase and quadrature components of Code 0 (unphased), respectively. As shown in Equations (1) and (2), the phased Code 0 is obtained by shifting Code 0 by $a$ in phase, scaling the in-phase component of Code 0 by $A$ in amplitude, and scaling the quadrature component of Code 0 by $B$ in amplitude. Similarly, for Code 1, as shown at 344,

$$I' = C\ (I * \cos(b) - Q * \sin(b)) \qquad (3)$$

$$Q' = D\ (I * \cos(b) + Q * \sin(b)) \qquad (4)$$

In Equations (3) and (4), $I'$ and $Q'$ represent the in-phase and quadrature components of phased Code 1, respectively; and $I$ and $Q$ represent the in-phase and quadrature components of Code 1 (unphased), respectively. As shown in Equations (3) and (4), phased Code 1 is obtained by shifting the Code 1 by $b$ in phase, scaling the in-phase component of Code 1 by $C$ in amplitude and scaling the quadrature component of Code 1 by $D$ in amplitude.

Similarly, amplitude and phase manipulation are applied to Code 2 at 346, Code m at 348, etc. After the phase and amplitude manipulation, the multiple individual binary codes are summed together at 360a and result in a superposition code 370a for Group 1 (320a). Similar or different amplitude and phase manipulations can be applied to codes in other groups.

In some implementations, the values of phase shift (e.g., a, b, ..., r) and amplitude change (e.g., A, B, C, D, ..., X and Y) can be selected randomly or in various different ways. For example, the amplitudes can be random values while the phases can be equally spaced from 0 to 2*pi. In some implementations, such amplitude and phase manipulation can reduce or eliminate correlations that may exist that can cause the wireless signal to be limited. Additional or different functions can be applied to the phase and amplitude of each binary code in the inspection subset.

At 250, superposition code correlations between the wireless signal and the superposition codes are computed. The superposition code correlations can include the respective correlations between the wireless signal and the respective superposition codes of the inspection subsets. The correlation can be obtained, for example, based on a dot product or an inner product between the received signal and the superposition code. In some implementations, the correlation can be the normalized dot product (e.g., normalized by the magnitudes of the received signal and the superposition code). In some implementations, the superposition code correlation can be computed based on the covariance, correlation coefficient, or other indicators of dependence or other statistical relationships between the wireless signal and the superposition code.

For example, as shown in FIG. 3, for Group 1, a received signal 305 is correlated with the superposition code 370a at correlator 380a, resulting in a superposition code correlation 390a. The superposition code correlation 390a can be obtained, for example, based on a dot product or an inner product between the received signal 305 and the superposition code 370a normalized by the magnitudes of the received signal 305 and the superposition code 370a. Similarly, a superposition code correlation 390b can be obtained by correlating the received signal 305 with the superposition code 370b at correlator 380b for Group 2 (320b), and a superposition code correlation 390n can be obtained by correlating the received signal 305 with the superposition code 370n at correlator 380n for Group n (320n). Thus, N superposition code correlations can be obtained for the N inspection subsets for the current iteration.

At 260, a first subset can be selected based on a peak in the correlation between the wireless signal and the first superposition code of the first subset. In some implementations, among the N superposition code correlations, only one correlation has a peak in the correlation values. For example, as shown in FIG. 3, only the superposition code correlation 390a of Group 1 has peak values while the rest of the superposition code correlations 390b, ..., 390n have relatively constant low correlation values. As such, the Group 1 can be selected as the first subset or the winning subset that contains the target binary code that was applied to the wireless signal. In some implementations, the first subset can be selected based on existing peak detection algorithms, for example, by setting a predetermined or configurable threshold and identifying correlations that include values greater than the threshold. In some implementations, more than one superposition code correlation can include peak values. Consequently, the corresponding inspection subsets can be selected as candidate subsets for identifying the target binary code. The first subset can be one of the candidate subsets.

At 270, whether a first binary code is selected from the first subset as the target binary code can be determined. For instance, the first subset at the current iteration may contain only one individual binary code, and the only binary code in the first subset can be identified as the target binary code. As another example, the first subset at the current iteration may contain a small number of individual binary codes (e.g., less than 10, 100, etc. ). Selecting the first binary code from the first subset can include computing individual code correlations between the wireless signal and each of the binary codes in the first subset and selecting the first binary code based on a peak in the correlation between the wireless signal and the first binary code. The example process 200 can then proceed to 280.

In some implementations, the first subset at the current iteration may contain a large number of individual binary codes (e.g., more than 10, 100, etc.). For instance, selecting an individual binary code from the large number of codes in the first subset may be computationally expensive. In such cases, the example process 200 can return to 220. The first subset (or another subset) can then be identified as the current set for the next iteration. The example process 200 can then proceed to 230 and repeat the iterative process until the target binary code is identified.

At 280, the wireless signal is decoded by operation of a data processor based on the first binary code. For example, the wireless signal can be de-scrambled or decrypted based on the first binary code and the transmitter of the wireless signal can be identified. In some implementations, additional or different operations, such as channel decoding and source decoding, can be performed on the wireless signal after applying the first binary code, for example, to recover the data information contained in the wireless signal.

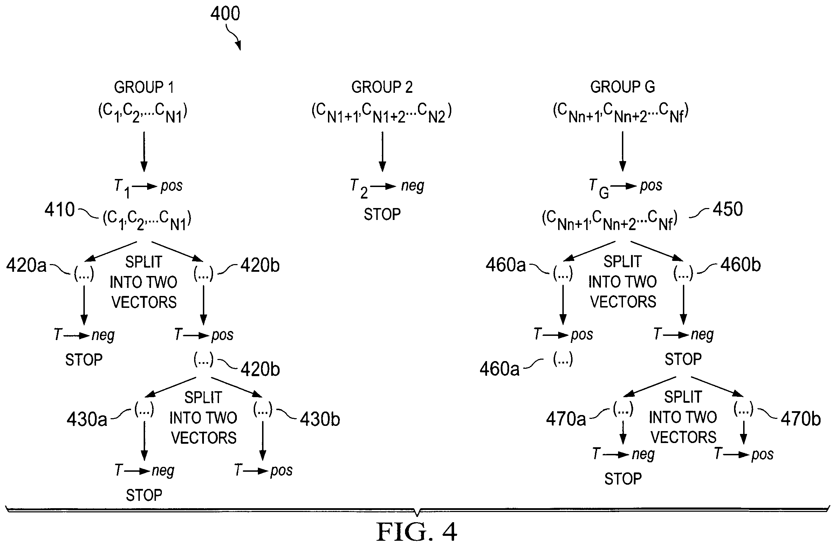

FIG. 4 includes example binary trees showing aspects of an example process 400 for identifying a code for wireless signal decoding. As shown in FIG. 4, the full set of binary codes is divided into G groups (or inspection subsets) in the first iteration. Group 1 includes binary codes $C_1$, $C_2$, ..., $C_{N1}$, Group 2 includes binary codes $C_{N1+1}$, $C_{N2}$, ..., $C_{N2}$, etc. , and Group G includes binary codes $C_{Nn+1}$, $C_{Nn+2}$, ..., $C_{Nf}$. The number of binary codes in the G groups can be the same or different.

A superposition code and a superposition correlation Ti (i = 1, 2, ..., G) can be computed for each of the G groups, for example, according to the example operations described with respect to 240 and 250 of the example process 200 or in another manner. When the superposition correlation contains peak values (denoted as "pos" in FIG. 4), the corresponding group can be selected as the candidate group. For example, as shown in FIG. 4, both Group 1 and Group G return superposition correlations $T_1$ and $T_G$ that have peak values. As such, Group 1 and Group G can be selected as the candidate groups to continue searching the target binary code within the group. On the other hand, for example, if the superposition correlation $T_2$ in Group 2 does not contain peak values (denoted as "neg" in FIG. 4), then the Group 2 is removed from consideration for searching of the target binary code.

FIG. 4 shows a binary search tree within each of the candidate groups, Group 1 and Group G. For example, the search within Group 1 includes a binary search tree with the root node 410 that includes the binary codes $C_1$, $C_2$, ..., $C_{N1}$. These codes can be split into two vectors (or inspection subsets) 420a and 420b. Respective superposition code and superposition correlation T can be computed for each of the vectors 420a and 420b. By performing peak detection of the superposition correlations, the vector 420a can be discarded from consideration while the vector 420b can be selected to continue searching for the target binary code. As shown, the vector 420b is further split into two vectors 430a and 430b. The iterative search process can be repeated until an individual binary code is found that returns a correlation including one or more peak correlation values. In some instances, no individual binary code is found to have peak correlation values within the last inspection subsect or vector. The latter case implies that the target binary code is not included in Group 1.

Similar operations can be performed on Group G, where a binary search tree starts with root node 450 that includes the binary codes $C_{Nn+1}$, $C_{Nn+2}$, ... , $C_{Nf}$. The binary search tree can include different levels of inspection subsets or vectors such as 460a and 460b, and 470a and 470b. The binary search tree can end, for instance, when the last level of inspection subset includes a single binary code.

In some implementations, only a single binary code among the G groups is identified as having a correlation including peak correlation values. In this case, the single binary code can be identified as the target binary code (or the first binary code at 270 of the example process 200). In some implementations, more than one binary code among the G groups can be identified as having correlations including peak correlation values. In this case, the correlations of these binary codes can be compared. In some implementations, the binary code with the maximum correlation values can be identified as the target binary code (or the first binary code at 270 of the example process 200). In some implementations, the target binary code can be selected from these binary codes based on other criteria.

Some of the operations described in this specification can be implemented as operations performed by a computer system, such as, for example, a computer system that includes one or more data processing apparatus that operates on data stored on one or more computer-readable storage devices or received from other sources. The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computing device or on multiple computers that are located at one site or distributed across multiple sites and interconnected by a communication network.

Some of the processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. A computing device typically includes a processor for performing actions in accordance with instructions and one or more memory devices for storing instructions and data. Generally, a computing device will also include, or be operatively coupled to receive data from or transfer data to, or both, one or more storage devices for storing data. However, a computing device need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, subject matter described in this specification can be implemented on a computer having a display device, e.g., an LCD (liquid crystal display) screen for displaying information to the user and a keyboard and a pointing device, e.g., touch screen, stylus, mouse, etc., by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computing device can interact with a user by sending documents to and receiving documents from a device that is used by the user; for example, by sending web pages to a web browser on a user's client device in response to requests received from the web browser.

Some of the subject matter described in this specification can be implemented in a computing system that includes a back-end component, e.g., as a data server, or that includes a middleware component, e.g., an application server, or that includes a front-end component, e.g., a client computing device having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a data network.

The computing system can include clients and servers. A client and server are generally remote from each other and typically interact through a data network. The relationship of client and server arises by virtue of computer programs running on the respective computers and having a client-server relationship to each other. In some implementations, a server transmits data to a client device. Data generated at the client device can be received from the client device at the server.

While this specification contains many details, these should not be construed as limitations on the scope of what may be claimed, but rather as descriptions of features specific to particular examples. Certain features that are described in this specification in the context of separate implementations can also be combined. Conversely, various features that are described in the context of a single implementation can also be implemented in multiple embodiments separately or in any suitable sub-combination.

A number of examples have been described. Nevertheless, it will be understood that various modifications can be made. Accordingly, other embodiments are within the scope of the following claims.

**Claims**

1. A method of decoding a wireless signal, the method comprising:

   computing superposition codes based on a set of orthogonal binary codes, the set comprising a plurality of subsets, each superposition code corresponding to one of the subsets and comprising a combination of the binary codes in the corresponding subset;
   wherein computing the superposition code corresponding to a subset comprises:

   generating phased codes by applying a distinct phase to each binary code in the subset; and
   summing the phased codes;

   selecting a first subset of the plurality of subsets based on a correlation between a wireless signal and a first superposition code, the first superposition code corresponding to the first subset;
   selecting a first binary code from the first subset based on a correlation between the wireless signal and the first binary code; and
   decoding the wireless signal by operation of a data processor based on the first binary code.

2. The method of claim 1, comprising:

   computing superposition code correlations between the wireless signal and the superposition codes, the superposition code correlations including the correlation between the wireless signal and the first superposition code;
   selecting the first subset based on a peak in the correlation between the wireless signal and the first superposition code;
   computing individual code correlations between the wireless signal and at least two of the binary codes in the first subset, the individual code correlations including the correlation between the wireless signal and the first binary code; and
   selecting the first binary code based on a peak in the correlation between the wireless signal and the first binary code.

3. The method of claim 1, comprising performing an iterative, binary search after selecting the first subset, wherein each iteration of the iterative, binary search comprises:

   identifying, for the current iteration, a current subset of the binary codes;
   dividing the current subset into two inspection subsets for the current iteration;
   identifying superposition codes based on the two inspection subsets for the current iteration; and
   based on correlations between the wireless signal and the superposition codes for the two inspection subsets, selecting one of the two inspection subsets as the current subset for the next iteration.

4. The method of claim 1, wherein the phased codes are generated by applying a distinct phase and distinct amplitude to each binary code in the subset.

5. The method of any of claims 1 through 3, comprising wirelessly receiving the wireless signal by operation of a radio interface.

6. The method of any of claims 1 through 3, wherein the wireless signal comprises a WCDMA transmission from a mobile device, and selecting the first binary code comprises identifying the first binary code as a scrambling code associated with the mobile device.

7. A wireless signal processing system comprising:

a radio system configured to detect a wireless signal; and
a data processing system configured to perform operations comprising:

receiving the wireless signal from the radio system;
computing superposition codes based on a set of orthogonal binary codes, the set comprising a plurality of subsets, each superposition code corresponding to one of the subsets and comprising a combination of the binary codes in the corresponding subset;
wherein computing the superposition code corresponding to a subset comprises:

generating phased codes by applying a distinct phase to each binary code in the subset; and
summing the phased codes;

selecting a first subset from the plurality of subsets based on a correlation between the wireless signal and a first superposition code, the first superposition code corresponding to the first subset;
selecting a first binary code from the first subset based on a correlation between the wireless signal and the first binary code; and
decoding the wireless signal based on the first binary code.

8. The wireless signal processing system of claim 7, the operations comprising:

computing superposition code correlations between the wireless signal and the superposition codes, the superposition code correlations including the correlation between the wireless signal and the first superposition code;
selecting the first subset based on a peak in the correlation between the wireless signal and the first superposition code;
computing individual code correlations between the wireless signal and at least two of the binary codes in the first subset, the individual code correlations including the correlation between the wireless signal and the first binary code; and
selecting the first binary code based on a peak in the correlation between the wireless signal and the first binary code.

9. The wireless signal processing system of claim 7, the operations comprising performing an iterative, binary search after selecting the first subset, wherein each iteration of the iterative, binary search comprises:

identifying, for the current iteration, a current subset of the binary codes;
dividing the current subset into two inspection subsets for the current iteration;
identifying superposition codes based on the two inspection subsets for the current iteration; and
based on correlations between the wireless signal and the superposition codes for the two inspection subsets, selecting one of the two inspection subsets as the current subset for the next iteration.

10. The wireless signal processing system of claim 7, wherein the phased codes are generated by applying a distinct phase and distinct amplitude to each binary code in the subset.

11. The wireless signal processing system of any of claims 7 through 9, wherein the wireless signal comprises a WCDMA transmission from a mobile device, and selecting the first binary code comprises identifying the first binary code as a scrambling code associated with the mobile device.

**Patentansprüche**

1.  Verfahren zum Decodieren eines drahtlosen Signals, wobei das Verfahren Folgendes umfasst:

    Berechnen von Überlagerungscodes basierend auf einem Satz von orthogonalen Binärcodes, wobei der Satz mehrere Teilmengen umfasst, wobei jeder Überlagerungscode einer der Teilmengen entspricht und eine Kombination der Binärcodes in der entsprechenden Teilmenge umfasst;
    wobei das Berechnen des Überlagerungscodes, der einer Teilmenge entspricht, Folgendes umfasst:

    Erzeugen von Phasencodes durch Anwenden einer eindeutigen Phase auf jeden Binärcode in der Teilmenge; und
    Summieren der Phasencodes;
    Auswählen einer ersten Teilmenge der mehreren Teilmengen basierend auf einer Korrelation zwischen einem drahtlosen Signal und einem ersten Überlagerungscode, wobei der erste Überlagerungscode der ersten Teilmenge entspricht;
    Auswählen eines ersten Binärcodes aus der ersten Teilmenge basierend auf einer Korrelation zwischen dem drahtlosen Signal und dem ersten Binärcode; und
    Decodieren des drahtlosen Signals durch einen Betrieb eines Datenprozessors basierend auf dem ersten Binärcode.

2.  Verfahren nach Anspruch 1, das Folgendes umfasst:

    Berechnen von Überlagerungscode-Korrelationen zwischen dem drahtlosen Signal und den Überlagerungscodes, wobei die Überlagerungscode-Korrelationen die Korrelation zwischen dem drahtlosen Signal und dem ersten Überlagerungscode einschließen;
    Auswählen der ersten Teilmenge basierend auf einem Höchstwert in der Korrelation zwischen dem drahtlosen Signal und dem ersten Überlagerungscode;
    Berechnen einzelner Code-Korrelationen zwischen dem drahtlosen Signal und wenigstens zwei der Binärcodes in der ersten Teilmenge, wobei die einzelnen Code-Korrelationen die Korrelation zwischen dem drahtlosen Signal und dem ersten Binärcode einschließen; und
    Auswählen des ersten Binärcodes basierend auf einem Höchstwert in der Korrelation zwischen dem drahtlosen Signal und dem ersten Binärcode.

3.  Verfahren nach Anspruch 1, das ein Durchführen einer iterativen binären Suche nach dem Auswählen der ersten Teilmenge umfasst, wobei jede Iteration der iterativen binären Suche Folgendes umfasst:

    Identifizieren, für die aktuelle Iteration, einer aktuellen Teilmenge der Binärcodes;
    Teilen der aktuellen Teilmenge in zwei Inspektionsteilmengen für die aktuelle Iteration;
    Identifizieren von Überlagerungscodes basierend auf den zwei Inspektionsteilmengen für die aktuelle Iteration; und
    basierend auf Korrelationen zwischen dem drahtlosen Signal und den Überlagerungscodes für die beiden Inspektionsteilmengen, Auswählen einer der beiden Inspektionsteilmengen als die aktuelle Teilmenge für die nächste Iteration.

4.  Verfahren nach Anspruch 1, wobei die Phasencodes durch Anwenden einer eindeutigen Phase und einer eindeutigen Amplitude an jeden Binärcode in der Teilmenge erzeugt werden.

5.  Verfahren nach einem der Ansprüche 1 bis einschließlich 3, das ein drahtloses Empfangen des drahtlosen Signals durch den Betrieb einer Funkschnittstelle umfasst.

6.  Verfahren nach einem der Ansprüche 1 bis einschließlich 3, wobei das drahtlose Signal eine WCDMA-Übertragung von einer mobilen Vorrichtung umfasst, und das Auswählen des ersten Binärcodes das Identifizieren des ersten Binärcodes als einen mit der mobilen Vorrichtung verknüpften Scramblingcode umfasst.

**7.** Drahtloses Signalverarbeitungssystem, das Folgendes umfasst:

ein Funksystem, das konfiguriert ist, um ein drahtloses Signal zu erfassen; und
ein Datenverarbeitungssystem, das konfiguriert ist, um Betriebe auszuführen, das Folgendes umfasst::

Empfangen des drahtlosen Signals von dem Funksystem;
Berechnen von Überlagerungscodes basierend auf einem Satz von orthogonalen Binärcodes, wobei der Satz mehrere Teilmengen umfasst, wobei jeder Überlagerungscode einer der Teilmengen entspricht und eine Kombination der Binärcodes in der entsprechenden Teilmenge umfasst;
wobei das Berechnen des Überlagerungscodes, der einer Teilmenge entspricht, Folgendes umfasst:

Erzeugen von Phasencodes durch Anwenden einer eindeutigen Phase auf jeden Binärcode in der Teilmenge; und
Summieren der Phasencodes;
Auswählen einer ersten Teilmenge aus den mehreren Teilmengen basierend auf einer Korrelation zwischen dem drahtlosen Signal und einem ersten Überlagerungscode, wobei der erste Überlagerungscode der ersten Teilmenge entspricht;
Auswählen eines ersten Binärcodes aus der ersten Teilmenge basierend auf einer Korrelation zwischen dem drahtlosen Signal und dem ersten Binärcode; und
Decodieren des drahtlosen Signals basierend auf dem ersten Binärcode.

**8.** Drahtloses Signalverarbeitungssystem nach Anspruch 7, wobei die Betriebe Folgendes umfassen:

Berechnen von Überlagerungscode-Korrelationen zwischen dem drahtlosen Signal und den Überlagerungscodes, wobei die Überlagerungscode-Korrelationen die Korrelation zwischen dem drahtlosen Signal und dem ersten Überlagerungscode einschließen;
Auswählen der ersten Teilmenge basierend auf einem Höchstwert in der Korrelation zwischen dem drahtlosen Signal und dem ersten Überlagerungscode;
Berechnen einzelner Code-Korrelationen zwischen dem drahtlosen Signal und wenigstens zwei der Binärcodes in der ersten Teilmenge, wobei die einzelnen Code-Korrelationen die Korrelation zwischen dem drahtlosen Signal und dem ersten Binärcode einschließen; und
Auswählen des ersten Binärcodes basierend auf einem Höchstwert in der Korrelation zwischen dem drahtlosen Signal und dem ersten Binärcode.

**9.** Drahtloses Signalverarbeitungssystem nach Anspruch 7, wobei die Betriebe das Durchführen einer iterativen binären Suche nach dem Auswählen der ersten Teilmenge umfassen, wobei jede Iteration der iterativen binären Suche Folgendes umfasst:

Identifizieren, für die aktuelle Iteration, einer aktuellen Teilmenge der Binärcodes;
Teilen der aktuellen Teilmenge in zwei Inspektionsteilmengen für die aktuelle Iteration;
Identifizieren von Überlagerungscodes basierend auf den zwei Inspektionsteilmengen für die aktuelle Iteration; und
basierend auf Korrelationen zwischen dem drahtlosen Signal und den Überlagerungscodes für die beiden Inspektionsteilmengen, Auswählen einer der beiden Inspektionsteilmengen als die aktuelle Teilmenge für die nächste Iteration.

**10.** Drahtloses Signalverarbeitungssystem nach Anspruch 7, wobei die Phasencodes durch Anwenden einer eindeutigen Phase und einer eindeutigen Amplitude an jeden Binärcode in der Teilmenge erzeugt werden.

**11.** Drahtloses Signalverarbeitungssystem nach einem der Ansprüche 7 bis einschließlich 9, wobei das drahtlose Signal eine WCDMA-Übertragung von einer mobilen Vorrichtung umfasst, und das Auswählen des ersten Binärcodes das Identifizieren des ersten Binärcodes als einen mit der mobilen Vorrichtung verknüpften Scramblingcode umfasst.

**Revendications**

**1.** Procédé de décodage d'un signal sans fil, le procédé comprenant :

le calcul de codes par superposition sur la base d'un ensemble de codes binaires orthogonaux, l'ensemble comprenant une pluralité de sous-ensembles, chaque code par superposition correspondant à un des sous-ensembles et comprenant une combinaison des codes binaires dans le sous-ensemble correspondant ;
le calcul du code par superposition correspondant à un sous-ensemble comprenant :

la génération de codes phasés en appliquant une phase distincte à chaque code binaire du sous-ensemble ; et
l'addition des codes phasés ;

la sélection d'un premier sous-ensemble de la pluralité de sous-ensembles sur la base d'une corrélation entre un signal sans fil et un premier code par superposition, le premier code par superposition correspondant au premier sous-ensemble ;
la sélection d'un premier code binaire à partir du premier sous-ensemble sur la base d'une corrélation entre le signal sans fil et le premier code binaire ; et
le décodage du signal sans fil par le fonctionnement d'un processeur de données sur la base du premier code binaire.

2. Procédé selon la revendication 1, comprenant :

le calcul de corrélations de codes par superposition entre le signal sans fil et les codes par superposition, les corrélations de codes par superposition comportant la corrélation entre le signal sans fil et le premier code par superposition ;
la sélection du premier sous-ensemble sur la base d'un pic dans la corrélation entre le signal sans fil et le premier code par superposition ;
le calcul de corrélations de codes individuels entre le signal sans fil et au moins deux des codes binaires dans le premier sous-ensemble, les corrélations de codes individuels comprenant la corrélation entre le signal sans fil et le premier code binaire ; et
la sélection du premier code binaire sur la base d'un pic dans la corrélation entre le signal sans fil et le premier code binaire.

3. Procédé selon la revendication 1, comprenant l'exécution d'une recherche binaire itérative après la sélection du premier sous-ensemble, dans lequel chaque itération de la recherche binaire itérative comprend :

l'identification, destinée à l'itération actuelle, d'un sous-ensemble actuel des codes binaires ;
la division du sous-ensemble actuel en deux sous-ensembles d'inspection destinés à l'itération actuelle ;
l'identification de codes par superposition sur la base des deux sous-ensembles d'inspection destinés à l'itération actuelle ; et
sur la base des corrélations entre le signal sans fil et les codes par superposition destinés aux deux sous-ensembles d'inspection, la sélection d'un des deux sous-ensembles d'inspection comme sous-ensemble actuel destiné à l'itération suivante.

4. Procédé selon la revendication 1, dans lequel les codes phasés sont générés en appliquant une phase distincte et une amplitude distincte à chaque code binaire dans le sous-ensemble.

5. Procédé selon l'une quelconque des revendications 1 à 3, comprenant la réception sans fil du signal sans fil par le fonctionnement d'une interface radio.

6. Procédé selon l'une quelconque des revendications 1 à 3, dans lequel le signal sans fil comprend une transmission AMRC large bande à partir d'un appareil mobile, et la sélection du premier code binaire comprend l'identification du premier code binaire en tant que code d'embrouillage associé au dispositif mobile.

7. Système de traitement de signal sans fil comprenant :

un système radio configuré pour détecter un signal sans fil ; et
un système de traitement de données configuré pour exécuter des opérations comprenant :

la réception du signal sans fil à partir du système radio ;
le calcul de codes par superposition sur la base d'un ensemble de codes binaires orthogonaux, l'ensemble comprenant une pluralité de sous-ensembles, chaque code par superposition correspondant à un des sous-ensembles et comprenant une combinaison des codes binaires dans le sous-ensemble correspondant ;
le calcul du code par superposition correspondant à un sous-ensemble comprenant :

la génération de codes phasés en appliquant une phase distincte à chaque code binaire du sous-ensemble ; et
l'addition des codes phasés ;

la sélection d'un premier sous-ensemble parmi la pluralité de sous-ensembles sur la base d'une corrélation entre le signal sans fil et un premier code par superposition, le premier code par superposition correspondant au premier sous-ensemble ;
la sélection d'un premier code binaire à partir du premier sous-ensemble sur la base d'une corrélation entre le signal sans fil et le premier code binaire ; et
le décodage du signal sans fil sur la base du premier code binaire.

8. Système de traitement de signal sans fil selon la revendication 7, les opérations comprenant :

le calcul de corrélations de codes par superposition entre le signal sans fil et les codes par superposition, les corrélations de codes par superposition comportant la corrélation entre le signal sans fil et le premier code par superposition ;
la sélection du premier sous-ensemble sur la base d'un pic dans la corrélation entre le signal sans fil et le premier code par superposition ;
le calcul de corrélations de codes individuels entre le signal sans fil et au moins deux des codes binaires dans le premier sous-ensemble, les corrélations de codes individuels comprenant la corrélation entre le signal sans fil et le premier code binaire ; et
la sélection du premier code binaire sur la base d'un pic dans la corrélation entre le signal sans fil et le premier code binaire.

9. Système de traitement de signal sans fil selon la revendication 7, les opérations comprenant l'exécution d'une recherche binaire itérative après la sélection du premier sous-ensemble, dans lequel chaque itération de la recherche binaire itérative comprend :

l'identification, destinée à l'itération actuelle, d'un sous-ensemble actuel des codes binaires ;
la division du sous-ensemble actuel en deux sous-ensembles d'inspection destinés à l'itération actuelle ;
l'identification de codes par superposition sur la base des deux sous-ensembles d'inspection destinés à l'itération actuelle ; et
sur la base des corrélations entre le signal sans fil et les codes par superposition destinés aux deux sous-ensembles d'inspection, la sélection d'un des deux sous-ensembles d'inspection comme sous-ensemble actuel destiné à l'itération suivante.

10. Système de traitement de signal sans fil selon la revendication 7, dans lequel les codes phasés sont générés en appliquant une phase distincte et une amplitude distincte à chaque code binaire dans le sous-ensemble.

11. Système de traitement de signal sans fil selon l'une quelconque des revendications 7 à 9, dans lequel le signal sans fil comprend une transmission AMRC large bande à partir d'un dispositif mobile, et la sélection du premier code binaire comprend l'identification du premier code binaire en tant que code d'embrouillage associé au dispositif mobile.

FIG. 1

200

210 — RECEIVE A WIRELESS SIGNAL

220 — IDENTIFY, FOR THE CURRENT ITERATION, A CURRENT SET OF ORTHOGONAL BINARY CODES

230 — DIVIDE THE CURRENT SET INTO N INSPECTION SUBSETS FOR THE CURRENT ITERATION

240 — COMPUTE A SUPERPOSITION CODE FOR EACH OF THE N INSPECTION SUBSETS

250 — COMPUTE SUPERPOSITION CODE CORRELATIONS BETWEEN THE WIRELESS SIGNAL AND THE SUPERPOSITION CODES

260 — SELECT THE FIRST SUBSET BASED ON A PEAK IN THE CORRELATION BETWEEN THE WIRELESS SIGNAL AND THE FIRST SUPERPOSITION CODE

SELECT A FIRST BINARY CODE FROM THE FIRST SUBSET?  NO

270

YES

280 — DECODE THE WIRELESS SIGNAL BY OPERATION OF A DATA PROCESSOR BASED ON THE FIRST BINARY CODE

FIG. 2

FIG. 3

400

GROUP 1
$(C_1, C_2, ... C_{N1})$

GROUP 2
$(C_{N1+1}, C_{N1+2}, ... C_{N2})$

GROUP G
$(C_{Nn+1}, C_{Nn+2}, ... C_{Nf})$

$T_1 \longrightarrow pos$

$T_2 \longrightarrow neg$
STOP

$T_G \longrightarrow pos$

410 $(C_1, C_2, ... C_{N1})$

$(C_{Nn+1}, C_{Nn+2}, ... C_{Nf})$ 450

420a $(...)$ SPLIT INTO TWO VECTORS $(...)$ 420b

460a $(...)$ SPLIT INTO TWO VECTORS $(...)$ 460b

$T \longrightarrow neg$
STOP

$T \longrightarrow pos$

$T \longrightarrow pos$

$T \longrightarrow neg$
STOP

$(...)$ 420b

460a $(...)$

430a $(...)$ SPLIT INTO TWO VECTORS $(...)$ 430b

470a $(...)$ SPLIT INTO TWO VECTORS $(...)$ 470b

$T \longrightarrow neg$
STOP

$T \longrightarrow pos$

$T \longrightarrow neg$
STOP

$T \longrightarrow pos$

FIG. 4